# EUROPÄISCHE PATENTSCHRIFT

(11) **EP 1 606 154 B1**
(45) Veröffentlichungstag und Bekanntmachung des Hinweises auf die Patenterteilung: **21.02.2007**
(21) Anmeldenummer: 04719955.9
(22) Anmeldetag: 12.03.2004
(51) Int. Cl.: B60T 13/66

(54) **AUS MINDESTENS ZWEI WAGEN BESTEHENDER SCHIENENFAHRZEUGVERBAND MIT DIREKTER ELEKTRO-PNEUMATISCHER BREMSEINRICHTUNG**
RAILWAY VEHICLE UNIT CONSISTING OF AT LEAST TWO CARRIAGES AND COMPRISING A DIRECT ELECTROPNEUMATIC BRAKE DEVICE
ENSEMBLE DE VEHICULES FERROVIAIRES COMPOSE D AU MOINS DEUX W AGONS ET EQUIPE D UN SYSTEME DE FREINAGE ELECTRO-PNEUMATIQUE DIRECT

(30) Priorität: 13.03.2003 DE 10310943
(43) Veröffentlichungstag der Anmeldung: 21.12.2005
(73) Patentinhaber: KNORR-BREMSE Systeme für Schienenfahrzeuge GmbH, 80809 München (DE)
(72) Erfinder: HUBER, Jürgen, 81549 München (DE); RASEL, Thomas, 81547 München (DE); KNOSS, Rainer, 80637 München (DE)
(74) Vertreter: Schönmann, Kurt
(86) Internationale Anmeldenummer: PCT/EP2004/002595
(87) Internationale Veröffentlichungsnummer: WO 2004/080775

(56) Entgegenhaltungen:
- DE-A- 2 625 274
- DE-A- 2 637 506
- DE-B- 1 191 849
- FR-A- 1 235 175
- FR-A- 1 402 520

## Beschreibung

### Stand der Technik

Die Erfindung betrifft einen aus mindestens zwei Wagen bestehenden Schienenfahrzeugverband mit direkter elektro-pneumatischer Bremseinrichtung gemäß der Gattung von Anspruch 1.

Elektro-pneumatische Bremseinrichtungen von Schienenfahrzeugen sind beispielsweise in der DE 26 25 274 A1 und in der DE 26 37 506 A1 beschrieben.

Bei Schienenfahrzeugen mit direkten elektro-pneumatischen Bremsanlagen werden die Bremszylinder direkt über elektrische Be- und Entlüftungsventile be- und entlüftet, wobei die Druckluft Vorratsdruckbehältern entnommen wird, welche an eine Hauptluftbehälterleitung angeschlossen sind. Hingegen wird bei indirekten elektro-pneumatischen Bremsanlagen durch Magnetventile der Druck in einer Hauptluftleitung verändert, welcher einen Steuerdruck für Steuerventile bildet, mit welchen die Brems- und Lösevorgänge ablaufen. Weiterhin ist auch die Hauptluftbehälterleitung vorhanden (Zweileitungsbremse). Direkte elektro-pneumatische Bremsanlagen wie zum Beispiel in der FR 1 402 520 A beschrieben haben gegenüber indirekten elektro-pneumatische Bremsanlagen den Vorteil kürzerer Druckaufbauzeiten, einer höheren Dynamik und einer günstigeren Blendingregelung.

Für den Fall eines Fehlers in einer direkten elektro-pneumatischen Bremsanlage, beispielsweise einem Ausfall der zuginternen Stromversorgung, muss der mit einer solchen Bremsanlage ausgerüstete Schienenfahrzeugverband auch von konventionellen UIC-Schienenfahrzeugen mit indirekter elektro-pneumatischer Bremsanlage abgeschleppt werden können. Hierzu wird in einem Schienenfahrzeugverband mit direkter elektro-pneumatischer Bremsanlage neben der Hauptluftbehälterleitung zusätzlich eine ansonsten nicht notwendige Hauptluftleitung als pneumatische Steuerleitung durch den gesamten Schienenfahrzeugverband geführt, um mangels elektrischer Signale zusätzliche Steuerventile mit pneumatischen Signalen zum Be- und Entlüften der Bremszylinder versorgen zu können.

Aus der Praxis bekannte direkte elektro-pneumatische Bremseinrichtungen gattungsbildender Schienenfahrzeugverbände weisen dann folgende Merkmale auf:
a) wenigstens ein pneumatischer Bremszylinder ist vorgesehen, der durch wenigstens ein elektrisch betätigbares Ventil einerseits mit einem Druckausgang einer Steuerventilanordnung und andererseits durch wenigstens ein weiteres elektrisch betätigbares Ventil mit einem zur Druckentlastung vorgesehenen Anschluss verbindbar ist,
b) ein Druckeingang der Steuerventilanordnung steht mit einem Vorratsluftbehälter und Letzterer mit einer Hauptluftbehälterleitung (HB) in Verbindung
c) die Steuerventilanordnung ist ausgebildet, um bei Ausfall oder Störung der Stromversorgung abhängig von einem an einem Steuereingang anstehenden pneumatischen Steuerdruck einen Brems- oder Lösedruck in den Bremszylinder einzusteuern,
d) an den voneinander weisenden Enden eines ersten Wagens oder eines ersten Triebkopfs und eines letzten Wagens oder eines zweiten Triebkopfs des Schienenfahrzeugverbands ist je ein Anschluss für eine Hauptluftleitung (HL) zum Heranführen eines pneumatischen Steuerdrucks eines anderen Schienenfahrzeugs sowie je ein Anschluss für die Hauptluftbehälterleitung (HB) zum Heranführen eines Hauptluftbehälterdrucks des anderen Schienenfahrzeugs vorhanden.

Unter den voneinander weisenden Enden des ersten Wagens oder des ersten Triebkopfs und des letzten Wagens oder des zweiten Triebkopfs sollen die freien, nicht mit anderen Wagen gekoppelten Enden verstanden werden. Bei Ausfall des Bordnetzes und dem hieraus resultierenden Liegenbleiben des Schienenfahrzeugverbands kann dann die Hauptluftleitung eines Schienenfahrzeugs mit indirekter elektro-pneumatischer Bremsanlage an den Anschluss der Hauptluftleitung des liegengebliebenen Schienenfahrzeugverbands gelegt werden, um einen Steuerdruck für den Steuereingang der Relaisventilanordnung zur Verfügung zu stellen. Das eine elektrische Ventil ist stromlos offen, so dass ein von der Steuerventilanordnung in Abhängigkeit des Steuerdrucks erzeugter Brems- oder Lösedruck in den Bremszylinder gelangen kann, während das weitere elektrische Ventil stromlos geschlossen ist, um den Druck im Bremszylinder zu halten. Der Bremszylinder ist beispielsweise ein passiver Bremszylinder, so dass der Bremsdruck ein Lösen der Bremse hervorruft.

Nachteilig bei dieser Anordnung ist jedoch, dass die Hauptluftleitung durch den gesamten Schienenfahrzeugverband geführt ist, was einen erheblichen Verrohrungsaufwand und folglich hohe Kosten verursacht.

Der vorliegenden Erfindung liegt demgegenüber die Aufgabe zugrunde, einen Schienenfahrzeugverband mit der eingangs erwähnten Art derart weiterzubilden, dass seine elektro-pneumatische Bremseinrichtung kostengünstiger zu realisieren ist.

Erfindungsgemäß wird diese Aufgabe durch die kennzeichnenden Merkmale von Patentanspruch 1 gelöst.

### Vorteile der Erfindung

Gemäß der Erfindung ist im Bereich der voneinander weisenden Enden des ersten Wagens oder des ersten Triebkopfs und des letzten Wagens oder des zweiten Triebkopfs des Schienenfahrzeugverbands zusätzlich je eine Koppelventileinrichtung vorgesehen, durch welche aus dem vom anderen Schienenfahrzeug herangeführten Steuerdruck und Hauptluftbehälterdruck in der Hauptluftbehälterleitung ein Steuerdruck für die Steuerventilanordnung erzeugbar ist. Dann wird die Hauptluftbehälterleitung neben ihrem ursprünglichen Zweck zur Versorgung der Vorratsluftbehälter mit Druckluft zusätzlich als fahrzeugverbandinterne, pneumatische Steuerleitung verwendet, welche einen von außen herangeführten Steuerdruck für die Steuerventilanordnung führt. Zu diesem Zweck steht der Steuereingang der Steuerventilanordnung mit einem den Koppelventileinrichtungen zwischengeordneten Abschnitt der Hauptluftbehälterleitung in Verbindung. Aufgrund dieser vorteilhaften Doppelnutzung der Hauptluftbehälterleitung muss sich die Hauptluftleitung nun nicht mehr durch den gesamten Schienenfahrzeugverband erstrecken, sondern lediglich vom Anschluss des ersten oder letzten Wagens zur zugeordneten, demgegenüber örtlich in unmittelbarer Nähe angeordneten Koppelventileinrichtung. Zwischen den einzelnen Wagen des Verbands wird dann lediglich die Hauptluftbehälterleitung durchgeschleift. Hierdurch sinken der Verrohrungsaufwand und folglich auch die Fertigungskosten erheblich.

Durch die in den Unteransprüchen aufgeführten Maßnahmen sind vorteilhafte Weiterbildungen und Verbesserungen der im Patentanspruch 1 angegebenen Erfindung möglich.

Gemäß einer besonders bevorzugten Ausführungsform der Erfindung ist die Koppelventileinrichtung derart ausgebildet, dass der Steuerdruck in der Hauptluftbehälterleitung proportional zu dem herangeführten Steuerdruck ist. Vorzugsweise wird diese Funktion durch ein kostengünstiges Relaisventil realisiert.

### Zeichnungen

Ausführungsbeispiele der Erfindung sind in der Zeichnung dargestellt und in der nachfolgenden Beschreibung näher erläutert. In der Zeichnung zeigt
- Fig.1: ein schematisches Funktionsschaubild eines Teils einer direkten elektro-pneumatischen Bremseinrichtung eines Schienenfahrzeugverbands gemäß einer ersten Ausführungsform der Erfindung;
- Fig.2: ein schematisches Funktionsschaubild eines Teils einer direkten elektro-pneumatischen Bremseinrichtung eines Schienenfahrzeugverbands gemäß einer weiteren Ausführungsform der Erfindung.

### Beschreibung der Ausführungsbeispiele

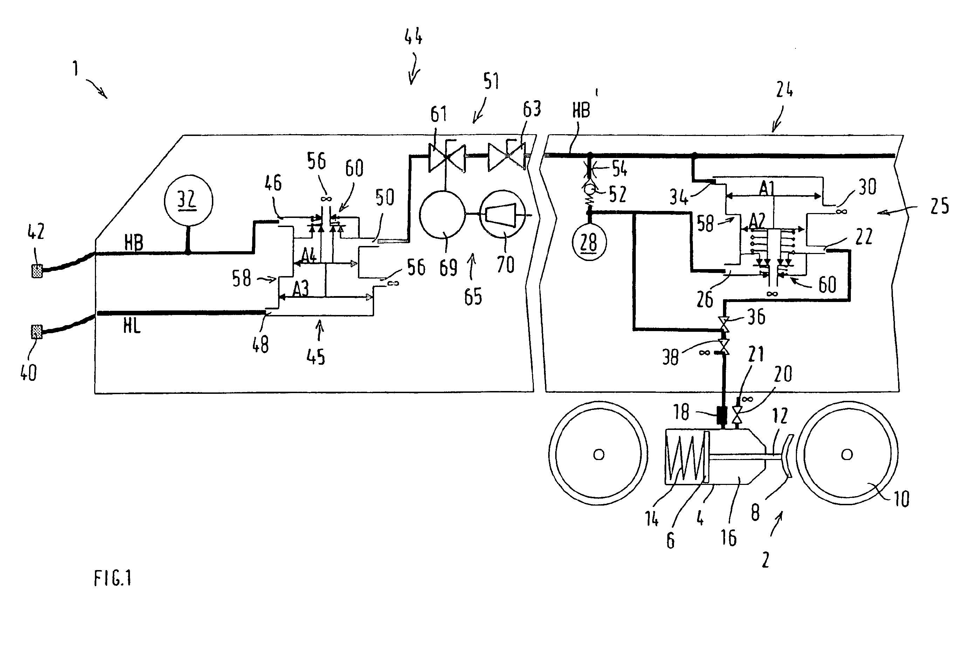

Von einem mindestens aus zwei Wagen bestehenden Schienenfahrzeugverband ist in Fig.1 aus Maßstabsgründen lediglich ein Ende eines ersten Wagens oder eines ersten Triebkopfs gezeigt. Bezüglich seiner im normalen Betriebsfall nicht gekoppelten freien Enden der Triebköpfe ist der Zugverband symmetrisch aufgebaut, d.h. der in Fig.1 dargestellte erste Triebkopf entspricht dem zweiten Triebkopf am anderen Ende des Schienenfahrzeugverbands.

Der Schienenfahrzeugverband hat eine insgesamt mit 1 bezeichnete elektro-pneumatische Bremseinrichtung gemäß einer bevorzugten Ausführungsform der Erfindung. Die Bremseinrichtung 1 betätigt mehrere Klotzbremsen 2, welche an Drehgestellen der Wagen des Schienenfahrzeugverbands angeordnet sind. Exemplarisch ist in Fig.1 die Klotzbremse 2 eines Drehgestells des letzten oder ersten Wagens gezeigt.

Die Klotzbremse 2 beinhaltet einen mit einem innerhalb eines Bremszylinders 4 linear beweglichen Stellkolben 6 gekoppelten Bremsklotz 8, der mit einer Bremsfläche eines Rades 10 des Drehgestells zusammenwirkt. Vorzugsweise ist der Bremsklotz 8 an einer Kolbenstange 12 des Stellkolbens 6 festgelegt, jedoch kann dem Stellkolben 6 und dem Bremsklotz 8 auch ein Bremsgestänge in bekannter Weise zwischengeordnet sein. Anstatt einer Klotzbremse 2 kann auch eine Scheibenbremse durch den Bremszylinder 4 betätigt werden.

Der Bremszylinder 4 ist vorzugsweise als passiver Bremszylinder ausgeführt, d.h. dass der Stellkolben 6 durch eine Feder 14 in Bremszuspannrichtung federbelastet ist und durch Druckbeaufschlagung einer zwischen der von der Feder 14 weg weisenden Kolbenseite und einer Wand des Bremszylinders 4 gebildeten Druckkammer 16 in Bremslösestellung gebracht wird. Die Druckkammer 16 des Bremszylinders 4 wird durch ein Belüftungsventil 18 und ein Entlüftungsventil 20 be- bzw. entlüftet. Das Entlüftungsventil 20 ist mit einem zur Druckentlastung vorgesehenen Anschluß 21 und das Belüftungsventil 18 mit einem Druckausgang 22 einer Steuerventilanordnung 24 verbunden. Ein Druckeingang 26 der Steuerventilanordnung 24 steht mit einem Vorratsluftbehälter 28 in Verbindung. Darüber hinaus weist die Steuerventilanordnung 24 eine Druckentlastung 30 auf.

Der Vorratsluftbehälter 28 ist darüber hinaus mit einer Hauptluftbehälterleitung HB' verbunden, welche Druckluft aus einem Hauptluftbehälter 32 führt, die beispielsweise unter einem Druck von 10 bar steht. Die Bremseinrichtung 1 ist eine sog. direkte elektro-pneumatische Bremseinrichtung, d.h. der Bremszylinder 4 wird direkt über die elektrischen Be- und Entlüftungsventile 18, 20 be- und entlüftet, wobei die Druckluft dem Vorratsdruckbehälter 28 entnommen wird, welcher von der Hauptluftbehälterleitung HB' mit Druckluft versorgt wird. Das Belüftungsventil 18 und das Entlüftungsventil 20 stehen mit einem den gesamten Schienenfahrzeugverband überspannenden, in Fig.1 nicht gezeigten Datenbus, insbesondere einem CAN-Bus in Signafverbindung, um in diese Komponenten von einer mit dem Datenbus kommunizierenden zentralen Steuereinrichtung ausgesteuerte, auf einem Brems- oder Lösewunsch des Fahrers basierende Bremsanforderungssignale oder Bremslösesignale einzusteuem. Bei dem Belüftungsventil 18 handelt es sich vorzugsweise um ein stromlos offenes Magnetventil, bei dem Entlüftungsventil 20 um ein stromlos geschlossenes Magnetventil.

Die Steuerventilanordnung 24 dient als unterlegte Sicherheitsebene in einem Störfall, beispielsweise bei einem Ausfall des Bordstroms, wenn aufgrund eines Stromausfalls die elektrischen Be- und Entlüftungsventile 18, 20 nicht mehr betätigt werden können. Die Steuerventilanordnung 24 ist in der Lage, abhängig von einem an einem Steuereingang 34 anstehenden pneumatischen Steuerdruck einen Brems- oder Lösedruck an seinem Druckausgang 22 zu erzeugen und durch das dann stromlos geöffnete Belüftungsventil 18 in den Bremszylinder 4 einzusteuern. Da die Steuerventilanordnung 24 nur im Störfall auf den Bremszylinder 4 wirken soll, ist ihrem Druckausgang 22, dem Vorratsluftbehälter 28 und dem Belüftungsventil 18 ein Umschaltventil 36 zwischengeordnet, welches im Störfall den Druckausgang 22 der Steuerventilanordnung 24 und ansonsten den Vorratsluftbehälter 28 mit dem Belüftungsventil 18 verbindet. Das Umschaltventil 36 wird beispielsweise durch ein elektrisch betätigtes Magnetventil gebildet, wobei es in seiner stromlosen Schaltstellung den Druckausgang 22 der Steuerventilanordnung 26 und in der bestromten Schaltstellung den Vorratsluftbehälter 28 mit dem Belüftungsventil 18 verbindet. Weiterhin ist dem Umschaltventil 36 und dem Belüftungsventil 18 ein Magnetventil 38 mit einer Entlüftung zwischengeordnet.

Um im Störfall einen Steuerdruck für die Steuerventilanordnung 24 sowie ausreichend Hauptluftdruck zur Verfügung zu haben, weisen der erste und der letzte Wagen des Schienenfahrzeugverbands, in der Regel die beiden Triebköpfe, je einen Anschluss 40 für eine Hauptluftleitung HL zum Heranführen eines pneumatischen Steuerdrucks eines anderen Schienenfahrzeugs sowie je einen Anschluss 42 für die Hauptluftbehälterleitung HB zum Heranführen eines Hauptluftbehälterdrucks des anderen Schienenfahrzeugs auf. Die Anschlüsse 40, 42 dienen folglich zur Versorgung der Bremseinrichtung 1 mit Druckluft bzw. pneumatischen Bremssteuersignalen im Störfall. Denn dann muss es möglich sein, den Schienenfahrzeugverband nicht nur von einem mit einer gleichartigen, direkten elektro-pneumatischen Bremseinrichtung ausgerüsteten Schienenfahrzeug abzuschleppen, bei welchem der Brems- bzw. Lösedruck im Bremszylinder 4 ohne Beteiligung pneumatischer Steuerventile lediglich durch elektrische Steuersignale für die Be- und Entlüftungsventile 18, 20 erzeugt wird, sondern auch von einem Schienenfahrzeug mit einer indirekten elektro-pneumatischen Bremseinrichtung, bei welcher durch elektrische Ventile zunächst der Druck in der Hauptluftleitung HL verändert wird und die Brems- und Lösevorgänge dann über pneumatische Steuerventile ablaufen. Schienenfahrzeuge mit solchen indirekten elektro-pneumatischen Bremseinrichtungen weisen folglich stets eine Zweileitungsbremse mit einer Hauptluftbehälterleitung HB und einer Hauptluftleitung HL auf, welche einen vom Brems- oder Löseanforderungssignal variablen Steuerdruck von beispielsweise 0 bis 5 bar führt.

Der Anschluss 42 für die Hauptluftbehälterleitung HB und der Anschluss 40 für die Hauptluftleitung HL des ersten Wagens und des letzten Wagens des Zugverbands stehen unmittelbar, d.h. direkt oder über sehr kurze pneumatische Leitungen HB bzw. HL mit je einer Koppelventileinrichtung 44 in Verbindung, durch welche aus dem vom anderen Schienenfahrzeug herangeführten Steuerdruck und Hauptluftbehälterdruck in dem den Koppelventileinrichtungen 44 zwischengeordneten Abschnitt HB' der Hauptluftbehälterleitung HB einerseits ein Vorratsdruck und andererseits aber auch ein Steuerdruck für die Steuerventilanordnung 24 erzeugbar ist. Die Koppelventileinrichtung 44 beinhaltet vorzugsweise ein Relaisventil 45. Im einzelnen ist beispielsweise der dem ersten Wagen zugeordnete Anschluss 42 für die Hauptluftbehälterleitung HB mit einem Druckeingang 46 des Relaisventils 45, der dem ersten Wagen zugeordnete Anschluss 40 für die Hauptluftleitung HL mit einem Steuereingang 48 des Relaisventils 45 und ein Druckausgang 50 mit einer Umschaltventileinrichtung 51 verbunden, welche wiederum mit dem den Koppelventileinrichtungen 44 zwischengeordneten Abschnitt HB' der Hauptluftbehälterleitung HB verbunden ist. Weiterhin verfügt das Relaisventil 45 über eine Druckentlastung 56. Dem Vorratsluftbehälter 28 und dem Abschnitt HB' der Hauptluftbehälterleitung HB ist ein lediglich zum Vorratsluftbehälter 28 hin öffnendes Rückschlagventil 52 sowie eine Drossel 54 zwischengeordnet.

Die Steuerventilanordnung 24 beinhaltet vorzugsweise ebenfalls ein Relaisventil 25. Der Aufbau der beiden Relaisventile 25, 45 mit jeweils einem federbelasteten Doppelkolben 58 und einem federbelasteten Doppelsitzventil 60 ist an sich bekannt, weshalb hier nicht näher darauf eingegangen werden soll. Beide Relaisventile 25, 45 sind vorzugsweise derart ausgebildet ist, dass sie abhängig von dem an ihrem Steuereingang 34, 48 anstehenden Steuerdruck den Druck an ihrem Druckausgang 22,50 halten, senken oder steigern. Insbesondere können sie im Laufe der Drucksteigerungs- bzw. Drucksenkphase an ihrem Druckausgang 22, 50 einen zu dem an ihrem Steuereingang 34, 48 anstehenden Steuerdruck proportionalen Druck aussteuern, wobei der Proportionalitätsfaktor durch das jeweils vorliegende Flächenverhältnis der größeren Fläche A1 bzw. A3 zu der kleineren Fläche A2 bzw. A4 des Doppelkolbens 58 gebildet wird. Anstatt zwei Relaisventile 25, 45 können auch zwei Lastbremsventile oder ein Kombination aus einem Lastbremsventil und einem Relaisventil verwendet werden.

Die Umschalteinrichtung 51 bildet einen Teil der Koppelventileinrichtung 44 und beinhaltet ein Umschaltventil 61, welches zwischen einer Schaltstellung, in welcher der Druckausgang 50 des Relaisventils 45 mit einem Absperrventil 63 verbunden ist, und einer Schaltstellung, in welcher der Druckausgang 50 des Relaisventils 45 einer Luftversorgung 65 des ersten Triebkopfs zugeschaltet ist, umgeschaltet werden kann. Die Luftversorgung 65 beinhaltet einen Druckluftbehälter 69 sowie einen Verdichter 70, der den Druckluftbehälter 69 füllt.

Vor diesem Hintergrund ist die Funktionsweise der direkten elektro-pneumatischen Bremseinrichtung 1 gemäß der bevorzugten Ausführungsform wie folgt:

Zum Abschleppen des bei ausgefallener bzw. stillgelegter Stromversorgung stehen gebliebenen Schienenfahrzeugverbands wird über den Anschluss 42 für die Hauptluftbehälterleitung HB und den Anschluss 40 für die Hauptluftleitung HL von einem anderen Schienenfahrzeug einerseits ein Hauptluftdruck in Höhe von beispielsweise 10 bar sowie ein Steuerdruck in einem Bereich von beispielsweise 0 bis 5 bar herangeführt. Das Relaisventil 45 bildet aus diesen beiden Drücken einen zum Druck in der Hauptluftleitung HL proportionalen Druck in einem Bereich von 0 bis 10 bar an seinem Druckausgang 50. Im Abschleppfall werden das Umschaltventil 61 und das Absperrventil 63 der dem an das andere Schienenfahrzeug angekoppelten ersten Triebkopf zugeordneten Umschaltventileinrichtung 51 entweder automatisch oder durch den Zugführer in eine Schaltstellung gebracht, in welcher sie den Druck am Druckausgang 50 des Relaisventils 45 durch die Umschalteinrichtung 51 hindurch- und in den Abschnitt HB' der Hauptluftbehälterleitung HB einsteuern, welcher dort den Steuerdruck für das Relaisventil 25 darstellt. Andererseits muss die dem zweiten, nicht angekoppelten Triebkopf zugeordnete, in Fig.1 nicht gezeigte Umschalteinrichtung das entsprechende Relaisventil von dem Abschnitt HB' trennen, damit dieser nicht entlüftet wird. Dies wird beispielsweise dadurch bewerkstelligt, dass das entsprechende Absperrventil geschlossen wird. Der in dem Abschnitt HB' herrschende Steuerdruck steht dann an dem Steuereingang 34 des Relaisventils 25 an, woraufhin während der Drucksteigerungs- oder Drucksenkphasen an seinem Druckausgang 22 ein proportionaler Druck ausgesteuert wird, welcher über das stromlose Umschaltventil 36, das stromlos durchgeschaltete Magnetventil 38 und das ebenfalls stromlos offene Belüftungsventil 18 als Brems- oder Lösedruck in den Bremszylinder 4 eingesteuert wird. Da der Bremszylinder 4 als passiver Bremszylinder ausgeführt ist, bewirkt beispielsweise eine Drucksteigerung in der Druckkammer 16 ein Lösen der Klotzbremse 2, so dass der Schienenfahrzeugverband mit gelösten Bremsen abgeschleppt werden kann. Andererseits bewirkt eine Drucksenkung in der Hauptluftleitung HL während einer Drucksenkphase eine Senkung des vom Relaisventil 25 in den Bremszylinder 4 eingesteuerten Druck durch Entlüften der Druckkammer 16 über die Druckentlastung 30 des Relaisventils 25. Schließlich sind in Abhängigkeit des herangeführten Drucks in der Hauptluftleitung HL Stellungen der Relaisventile 25, 45 möglich, in welchen der Druck in der Druckkammer 16 gehalten wird.

Im Normalbetrieb, d.h. bei intakter Stromversorgung des Schienenfahrzeugverbands befinden sich die Umschalteinrichtungen 51 beider Koppelventileinrichtungen 44 und insbesondere deren Umschaltventile 61 in einer Schaltstellung, in welcher die jeweilige Luftversorgung 65 durch das geöffnete Absperrventil 63 mit dem Abschnitt HB' der Hauptluftbehälterleitung HB in Verbindung steht, während die Druckausgänge 50 der Relaisventile 45 hiervon abgekoppelt sind.

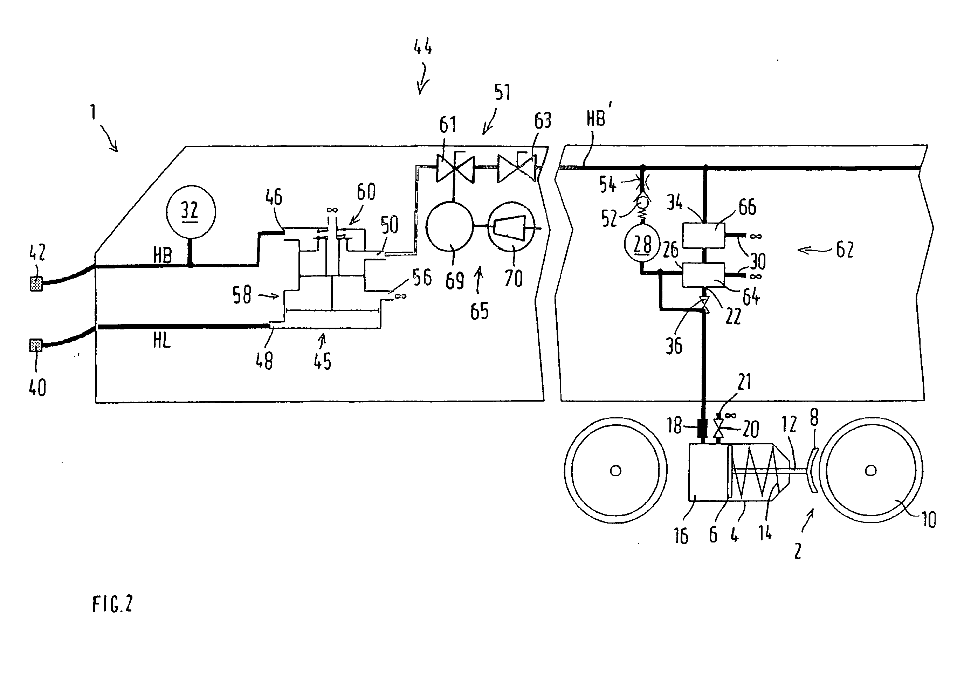

Bei dem weiteren Ausführungsbeispiel der Erfindung nach Fig.2 sind die gegenüber dem vorhergehenden Beispiel gleichbleibenden und gleichwirkenden Teile durch die gleichen Bezugszeichen gekennzeichnet. Im Unterschied zum ersten Ausführungsbeispiel besteht die Steuerventilanordnung 62 aus einem wie oben beschriebenen Relaisventil 64 und einem vorgeschalteten Steuerventil 66, welches an eine gewünschte Charakteristik des Steuerdrucks in der Hauptluftbehälterleitung HB' angepasst ist. Denn der Bremszylinder ist vorliegend ein aktiver Bremszylinder, d.h. dass eine Drucksteigerung in der Druckkammer 16 kein Lösen sondern ein Zuspannen der Klotzbremse 2 gegen die Wirkung der Feder 14 und eine Drucksenkung kein Zuspannen sondern ein Lösen der Klotzbremse 2 hervorruft.

### Bezugszahlenliste

- 1: Bremseinrichtung
- 2: Klotzbremse
- 4: Bremszylinder
- 6: Stellkolben
- 8: Bremsklotz
- 10: Rad
- 12: Kolbenstange
- 14: Feder
- 16: Druckkammer
- 18: Belüftungsventil
- 20: Entlüftungsventil
- 21: Druckentlastung
- 22: Druckausgang
- 24: Steuerventilanordnung
- 25: Relaisventil
- 26: Druckeingang
- 28: Vorratsluftbehälter
- 30: Druckentlastung
- 32: Hauptluftbehälter
- 34: Steuereingang
- 36: Umschaltventil
- 38: Magnetventil
- 40: Anschluss
- 42: Anschluss
- 44: Ventileinrichtung
- 45: Relaisventil
- 46: Druckeingang
- 48: Steuereingang
- 50: Druckausgang
- 52: Rückschlagventil
- 54: Drossel
- 56: Druckentlastung
- 58: Doppelkolben
- 60: Doppelsitzventil
- 61: Umschaltventil
- 62: Steuerventilanordnung
- 63: Absperrventil
- 64: Relaisventil
- 65: Luftversorgung
- 66: Steuerventil
- 69: Druckluftbehälter
- 70: Verdichter

- HB, HB': Hauptluftbehälterleitung
- HL: Hauptluftleitung
- A1..A4: Kolbenflächen

## Patentansprüche

1. Aus mindestens zwei Wagen bestehender Schienenfahrzeugverband mit direkter elektro-pneumatischer Bremseinrichtung (1), welche folgende Merkmale aufweist:
a) wenigstens ein pneumatischer Bremszylinder (4) ist vorgesehen, der durch wenigstens ein elektrisch betätigbares Ventil (18) einerseits mit einem Druckausgang (22) einer Steuerventilanordnung (24; 62) und andererseits durch wenigstens ein weiteres elektrisch betätigbares Ventil (20) mit einem zur Druckentlastung vorgesehenen Anschluß (21) verbindbar ist,
b) ein Druckeingang (26) der Steuerventilanordnung (24; 62) steht mit einem Vorratsluftbehälter (28) und Letzterer mit einer Hauptluftbehälterleitung (HB') in Verbindung,
c) die Steuerventilanordnung (24; 62) ist ausgebildet, um bei Ausfall oder Störung der Stromversorgung abhängig von einem an einem Steuereingang (34) anstehenden pneumatischen Steuerdruck einen Brems- oder Lösedruck in den Bremszylinder (4) einzusteuern,
**dadurch gekennzeichnet, dass**
d) an den voneinander weg weisenden Enden eines ersten Wagens oder eines ersten Triebkopfs und eines letzten Wagens oder eines zweiten Triebkopfs des Schienenfahrzeugverbands je ein Anschluss (40) für eine Hauptluftleitung (HL) zum Heranführen eines pneumatischen Steuerdrucks eines anderen Schienenfahrzeugs sowie je ein Anschluss (42) für die Hauptluftbehälterleitung (HB) zum Heranführen eines Hauptluftbehälterdrucks des anderen Schienenfahrzeugs vorhanden ist,
e) im Bereich der voneinander weg weisenden Enden des ersten Wagens oder des ersten Triebkopfs und des letzten Wagens oder des zweiten Triebkopfs zusätzlich je eine Koppelventileinrichtung (44) vorgesehen ist, durch welche aus dem vom anderen Schienenfahrzeug herangeführten Steuerdruck und Hauptluftbehälterdruck in der Hauptluftbehälterleitung (HB') ein Steuerdruck für die Steuerventilanordnung (24; 62) erzeugbar ist, und dass
f) der Steuereingang (34) der Steuerventilanordnung (24; 62) mit einem den Koppelventileinrichtungen (44) zwischengeordneten Abschnitt (HB') der Hauptluftbehälterleitung (HB)in Verbindung steht.

2. Schienenfahrzeugverband nach Anspruch 1, **dadurch gekennzeichnet, dass** die Koppelventileinrichtung (44) derart ausgebildet ist, dass der Steuerdruck in dem Abschnitt (HB') der Hauptluftbehälterleitung (HB) proportional zu dem herangeführten Steuerdruck ist.

3. Schienenfahrzeugverband nach Anspruch 2, **dadurch gekennzeichnet, dass** die Koppelventileinrichtung (44) ein Relaisventil (45) sowie eine Umschaltventileinrichtung (51) beinhaltet.

4. Schienenfahrzeugverband nach Anspruch 3, **dadurch gekennzeichnet, dass** die Umschalteinrichtung (51) ausgebildet ist, um den den Koppelventileinrichtungen (44) zwischengeordneten Abschnitt (HB') der Hauptluftbehälterleitung (HB) im Abschleppfall mit dem Relaisventil (45) und im Normalbetriebfall mit einer Luftversorgung (65) zu verbinden.

5. Schienenfahrzeugverband nach einem der vorhergehenden Ansprüche, **dadurch gekennzeichnet, dass** die Steuerventilanordnung (24; 62) ein Relaisventil (25; 64) beinhaltet.

6. Schienenfahrzeugverband nach einem der vorhergehenden Ansprüche, **dadurch gekennzeichnet, dass** die Anschlüsse (42) für die Hauptluftbehälterleitung (HB) und die Anschlüsse (40) für die Hauptluftleitung (HL) unmittelbar oder über sehr kurze pneumatische Leitungen mit der zugeordneten Ventileinrichtung (44) in Verbindung stehen.

7. Schienenfahrzeugverband nach einem der vorhergehenden Ansprüche, **dadurch gekennzeichnet, dass** dem Druckausgang (22) der Steuerventilanordnung (24; 62), dem Vorratsluftbehälter (28) und dem einen Ventil (18) ein Umschaltventil (36) zwischengeordnet ist, welches im Störfall den Druckausgang (22) der Steuerventilanordnung (24; 62) und ansonsten den Vorratsluftbehälter (28) mit dem einen Ventil (18) verbindet.

8. Schienenfahrzeugverband nach einem der vorhergehenden Ansprüche, **dadurch gekennzeichnet, dass** dem Vorratsluftbehälter (28) und dem Abschnitt (HB') der Hauptluftbehälterleitung (HB) ein lediglich zum Vorratsluftbehälter (28) hin öffnendes Rückschlagventil (52) sowie eine Drossel (54) zwischengeordnet ist.

9. Schienenfahreugverband nach einem der vorhergehenden Ansprüche, **dadurch gekennzeichnet, dass** der pneumatische Bremszylinder (4) als passiver oder aktiver Bremszylinder (4) ausgebildet ist.

10. Schienenfahrzeugverband nach einem der vorhergehenden Ansprüche, **dadurch gekennzeichnet, dass** das eine Ventil (18) ein stromlos offenes Ventil und das andere Ventil (20) ein stromlos geschlossenes Ventil ist.

## Claims

1. Train of railway vehicles consisting of at least two coaches, provided with a direct electro-pneumatic brake system (1), which presents the following features:
(a) at least one pneumatic brake cylinder (4) is provided that is provided for connection, on the one hand, by means of at least one electrically operable valve (18) to a pressure outlet (22) of a distributor valve system (24; 62) and, on the other hand, by means of at least one further electrically operable valve (20) to a port (21) provided for pressure relief;
(b) one pressure inlet (26) of said distributor valve system (24; 62) communicates with a compressed-air reservoir (28), with the latter communicating with a main air reservoir pipe (HB');
(c) said distributor valve system (24; 62) is configured for controlling a brake application or brake release pressure into said brake cylinder (4) in the case of failure of or trouble in the power supply in response to a pneumatic control pressure prevailing at a control input (34);
**characterised in that**
(d) one respective connector (40) for a main brake pipe (HL) is provided on the ends oriented away from each other of a first coach or a first motor coach and of a last coach or a second motor coach of the train of railway vehicles for supplying a pneumatic control pressure of another railway vehicle, while one respective connector (42) is provided for said main air reservoir pipe (HB) for supplying a main air reservoir pressure of said other railway vehicle;
(e) that in the region of said ends oriented away from each other of said first coach or said first motor coach and of the last coach or said second motor coach, one respective additional coupling valve means (44) is provided by means of which a control pressure may be generated for said distributor valve system (24; 62) from the control pressure supply from said other railway vehicle and from the main air reservoir pressure in said main air reservoir pipe (HB'), and that
(f) the control input (34) of said distributor valve system (24; 62) communicates with a section (HB') of said main air reservoir pipe (HB) interposed between said coupling valve means (44).

2. Train of railway vehicles according to Claim 1, **characterised in that** said coupling valve means (44) is so configured that the control pressure in said section (HB') of said main air reservoir pipe (HB) is proportional to the supplied control pressure.

3. Train of railway vehicles according to Claim 2, **characterised in that** said coupling valve means (44) includes a relay valve (45) as well as a change-over valve means (51).

4. Train of railway vehicles according to Claim 3, **characterised in that** said change-over means (51) is configured for connecting said section (HB') of said main air reservoir pipe (HB), which is interposed between said coupling valve means (44), to said relay valve (45) in the case of towing and to a compressed-air supply (65) in the case of normal operation.

5. Train of railway vehicles according to any of the preceding Claims, **characterised in that** said distributor valve system (24; 62) includes a relay valve (25; 64).

6. Train of railway vehicles according to any of the preceding Claims, **characterised in that** the connectors (42) for said main air reservoir pipe (HB) and the connectors (40) for said main brake pipe (HL) communicate with the associated valve means (44) directly or via very short pneumatic lines.

7. Train of railway vehicles according to any of the preceding Claims, **characterised in that** a change-over valve (36) is interposed between said pressure outlet (22) of said distributor valve system (24; 62), said compressed-air reservoir (28) and said one valve (18), which change-over valve connects, in the event of failure, said pressure outlet (22) of said distributor valve system (24; 62) and in all other cases said compressed-air reservoir (28) to said one valve (18).

8. Train of railway vehicles according to any of the preceding Claims, **characterised in that** a non-return valve (52) opening merely towards said compressed-air reservoir (28) as well as a throttle (54) are interposed between said compressed-air reservoir (28) and said section (HB') of said main air reservoir pipe (HB).

9. Train of railway vehicles according to any of the preceding Claims, **characterised in that** said pneumatic brake cylinder (4) is configured as passive or active brake cylinder (4).

10. Train of railway vehicles according to any of the preceding Claims, **characterised in that** said one valve (18) is a valve open in the non-energised state whilst said other valve (20) is a valve closed in the non-energised state.

## Revendications

1. Train de véhicules ferroviaires composé d'au moins deux wagons, muni d'un système de frein électropneumatique direct (1), présentant les caractéristiques suivantes :
(a) au moins un cylindre de frein pneumatique (4) est monté, qui est envisagé pour le raccord, d'un côté, moyennant d'au moins une seule soupape (18) à commande électrique à une sortie de pression (22) d'une unité à distributeur (24; 62) et, d'autre côté, moyennant d'au moins une autre soupape (20) à commande électrique à un connecteur (21), qui est montée à un connecteur (21) envisagé pour la décompression ;
(b) une entrée de pression (26) de ladite unité à distributeur (24; 62) se trouve en communication avec un réservoir d'air comprimé (28), au dernier se trouvant en communication avec un conduite principale (HB');
(c) ladite unité à distributeur (24; 62) est configurée pour la commande d'une pression de serrage ou de desserrage de frein dans ledit cylindre de frein (4) au cas de défaillance ou de défaut dans l'alimentation en courant en réponse à une pression de commande pneumatique régnant à une entrée de commande (34);
**caractérisé en ce**
(d) **qu'**un raccord (40) respectif pour une conduite générale de frein (HL) est monté aux extrémités dirigées en sens opposés d'un premier wagon ou d'un premier engin moteur et d'un dernier wagon ou d'un deuxième engin moteur du train de véhicules ferroviaires pour l'alimentation d'une pression de commande pneumatique d'un autre véhicule ferroviaire, pendant qu'un raccord respectif (42) est monté pour ladite conduite principale (HB) pour l'alimentation d'une pression dans le réservoir principal d'air comprimé dudit autre véhicule ferroviaire;
(e) en ce que, dans la zone desdites extrémités dirigées en sens opposés dudit premier wagon ou dudit premier engin moteur et du dernier wagon ou dudit deuxième engin moteur, un moyen à soupape de liaison supplémentaire respectif (44) est monté, moyennant duquel une pression de commande se peut engendrer pour ladite unité à distributeur (24; 62) à partir de l'alimentation en pression de commande arrivant dudit autre véhicule ferroviaire et de la pression dans le réservoir principal d'air comprimé dans ladite conduite principale (HB'), et en ce que
(f) l'entrée de commande (34) de ladite unité à distributeur (24; 62) se trouve en communication avec une segment (HB') de ladite conduite principale (HB),m qui est interposé entre lesdits moyens à soupape de liaison (44).

2. Train de véhicules ferroviaires selon la revendication 1, **caractérisé en ce que** ledit moyen à soupape de liaison (44) est configuré d'une telle manière, que la pression de commande dans ledit segment (HB') de ladite conduite principale (HB) soit proportionnelle à la pression de commande alimentée.

3. Train de véhicules ferroviaires selon la revendication 2, **caractérisé en ce que** ledit moyen à soupape de liaison (44) renferme une soupape de relais (45) ainsi qu'un moyen à soupape d'inversion (51).

4. Train de véhicules ferroviaires selon la revendication 3, **caractérisé en ce que** ledit moyen d'inversion (51) est configuré pour le raccord dudit segment (HB') de ladite conduite principale (HB), qui est interposé entre lesdits moyens à soupape de liaison (44), à ladite soupape de relais (45) au cas de remorquage et à une alimentation en air comprimé (65) au cas de service normale.

5. Train de véhicules ferroviaires selon une quelconque des revendications précédentes, **caractérisé en ce que** ladite unité à distributeur (24; 62) renferme une soupape de relais (25; 64).

6. Train de véhicules ferroviaires selon une quelconque des revendications précédentes, **caractérisé en ce que** les raccords (42) pour ladite conduite principale (HB) et les raccords (40) pour ladite conduite générale de frein (HL) se trouvent en communication avec les moyens affectés à soupape (44) directement ou via des conduites pneumatiques très courtes.

7. Train de véhicules ferroviaires selon une quelconque des revendications précédentes, **caractérisé en ce que** a soupape d'inversion (36) est interposée entre ladite sortie de pression (22) de ladite unité à distributeur (24; 62), ledit réservoir d'air comprimé (28) et ladite seule soupape (18), à cette soupape d'inversion reliant, au cas de défaillance, ladite sortie de pression (22) de ladite unité à distributeur (24; 62) et, dans tous les autres cas, ledit réservoir d'air comprimé (28) à ladite seule soupape (18).

8. Train de véhicules ferroviaires selon une quelconque des revendications précédentes, **caractérisé en ce qu'**une soupape de non-retour (52), qui s'ouvre seulement vers ledit réservoir d'air comprimé (28), ainsi qu'une vanne d'étranglement (54) sont interposées entre ledit réservoir d'air comprimé (28) et ledit segment (HB') de ladite conduite principale (HB).

9. Train de véhicules ferroviaires selon une quelconque des revendications précédentes, **caractérisé en ce que** ledit cylindre de frein pneumatique (4) est configuré en tant que cylindre de frein (4) actif ou passif.

10. Train de véhicules ferroviaires selon une quelconque des revendications précédentes, **caractérisé en ce que** ladite seule soupape (18) est une soupape ouverte en absence de courant, pendant que ladite autre soupape (20) est une soupape fermée en absence de courant.
